# EUROPEAN PATENT SPECIFICATION

(11) **EP 1 367 313 B1**
(45) Date of publication and mention of the grant of the patent: **20.02.2008**
(21) Application number: 02258513.7
(22) Date of filing: 10.12.2002
(51) Int. Cl.: F16M 11/10, F16M 13/02

(54) **Support bracket**
Halterungsvorrichtung
Dispositif de support

(30) Priority: 28.05.2002 KR 2002029541
(43) Date of publication of application: 03.12.2003
(73) Proprietor: SAMSUNG ELECTRONICS CO., LTD., Suwon-si, Gyeonggi-do 442-742 (KR)
(72) Inventor: Hong, You-sik, Suwon City, Kyungki-do (KR); Kim, Young-tae, suji-eup, Yongin City, Kyungki-do (KR); Byoun, Dae-Hyoun, Seoul City, Korea (KR)
(74) Representative: Grey, Ian Michael

(56) References cited:
- EP-A- 1 401 200
- US-A- 945 762
- US-A1- 2002 033 436
- PATENT ABSTRACTS OF JAPAN vol. 1996, no. 01, 31 January 1996 (1996-01-31) -& JP 07 236103 A (FUJITSU GENERAL LTD), 5 September 1995 (1995-09-05)
- PATENT ABSTRACTS OF JAPAN vol. 2000, no. 03, 30 March 2000 (2000-03-30) -& JP 11 344934 A (SONY CORP), 14 December 1999 (1999-12-14)

## Description

The present invention relates to a support bracket for mounting a monitor to an inclined plane such as a wall, the support bracket comprising a first hinge means to enable the monitor to pivot with respect to the inclined plane, a hinged stay having first and second ends rotatably mountable to the monitor and the inclined plane respectively, and spring means operatively associated with the hinged stay to bias a monitor mounted to the support bracket towards the inclined plane.

It is known to provide a support bracket to enable a monitor to be mounted on a wall or other inclined plane. Such support brackets are becoming more widespread with the development of flat screen monitors using LCD or plasma technology which enable monitors to be mounted to a wall.

A conventional mounting bracket to mount an object such as the body of a display etc., onto a wall is known from, for example, Japanese patent publication No. 1999-344934. As illustrated in Figure 1, a conventional mounting bracket includes a pair of arms 150 for attachment to the body 101 of a monitor, a base 130 pivotally attached to a lower end of the arm 150 and mounted to a wall 170, and a hinged stay 110 extending between the arm 150 and the base 130 to enable the body 101 to be folded flat against, or pivoted away from, the wall 170.

The hinged stay 110 includes a first link 113 having a first end pivotally attached to an upper end of the base 130 and its remote end pivotally attached to the remote end of a second link 117 having its first end pivotally attached to the arm 150. The pivotal connection between the first and second links 113,117 includes a locking member 116 to control relative rotation between the first and second links 113,117.

The locking member 116 includes a compression spring (not shown) to enable relative rotation between the first and second links 113,117 to be enabled or disenabled by locking and releasing the compressive force of the compression spring. The locking member 116 is selectively locked at a number of discrete positions to enable the monitor to be positioned at a desired angle.

A shock absorber is disposed within the base 130 and includes a gas damper 160 and a wire 161 having a first end connected to the upper part of the gas damper 160 and a second end connected to a shaft (not shown) between the pair of arms 150. Therefore, even if the locking member 116 is released, the display main body 101 is prevented from tipping forward due to its own weight.

A conventional mounting bracket has a complicated structure because of the shock absorber, gas damper, wire and locking member, etc. It is also difficult and cumbersome for a user to adjust the angle of inclination of the monitor because the locking member must be released and retightened. Additionally, as the locking member only allows the monitor to be placed in one of several discrete locking positions, it is also impossible to minutely adjust the position of the monitor as desired.

A known mounting bracket to support a display device is disclosed in JP 07236103.

A support bracket according to the present invention is characterised in that the hinged stay comprises first and second members and means are provided to pivotally attach the first and second members together with a frictional force that is greater than, or equal to, the biasing force generated by the spring means.

In a preferred embodiment, means are provided to pivotally attach the first and/or second ends of the hinged stay to the monitor and inclined plane such that the frictional force between the first end and the monitor and/or between the second end and the inclined plane is greater than, or equal to, the biasing force generated by the spring means.

Embodiments of the invention will now be described, by way of example only, with reference to Figures 2 to 6 of the accompanying drawings, in which:

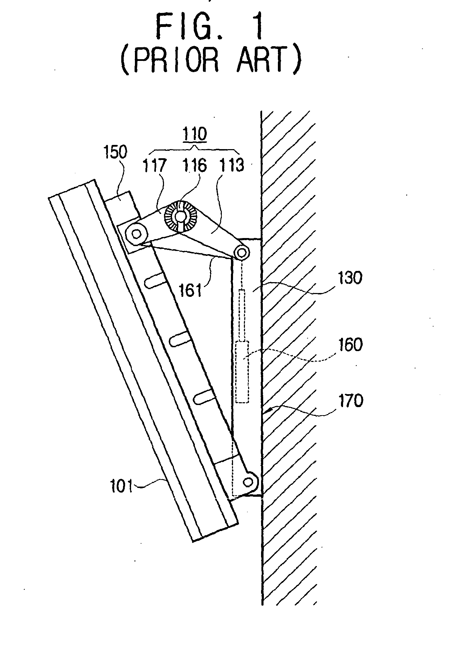

Figure 1 is a side view of a prior art mounting bracket with a monitor attached thereto;
Figure 2 is a side view of a mounting bracket according to the present invention in a position between the folded and unfolded condition;
Figure 3 is a perspective view of the mounting bracket;
Figure 4 is an exploded perspective view of the mounting bracket;
Figure 5 is a side view of the mounting bracket as illustrated in Figure 2 but in a folded condition;
Figure 6 is a side view of the mounting bracket illustrated in Figures 2 and 5 but in a completely unfolded condition.

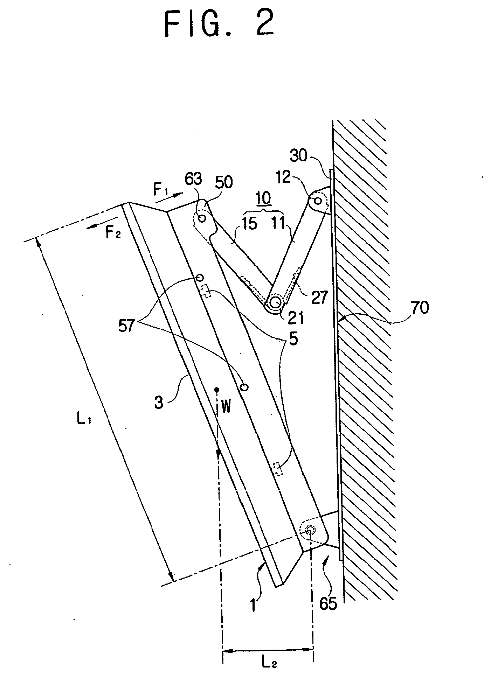

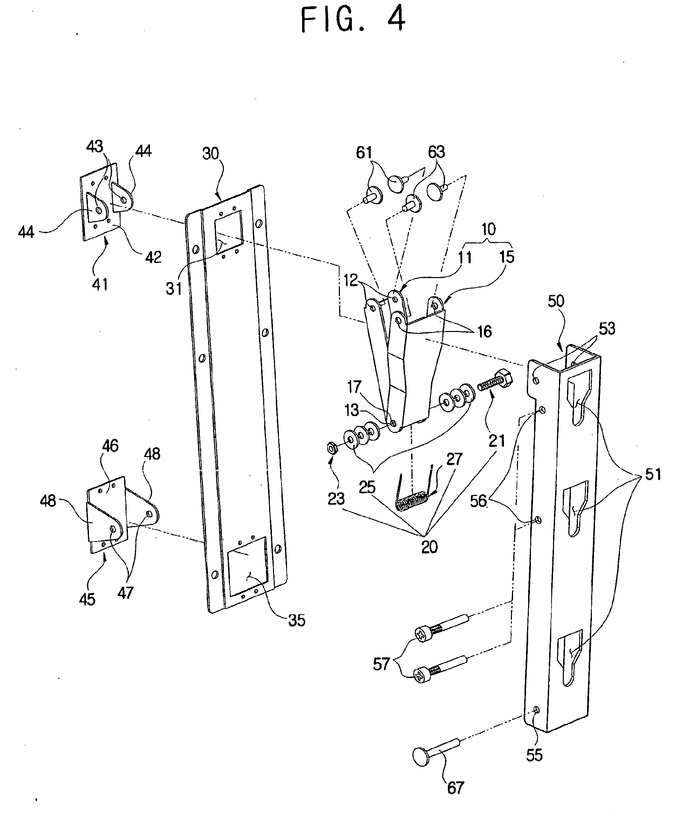

A mounting bracket according to the present invention having a display main body 1 with a display part 3 attached thereto is illustrated in Figures 2 to 4. The mounting bracket includes a main body support 50 pivotally mounted to a base 30 attached to a wall 70, and a link assembly 10 extending between the main body support 50 and the base 30.

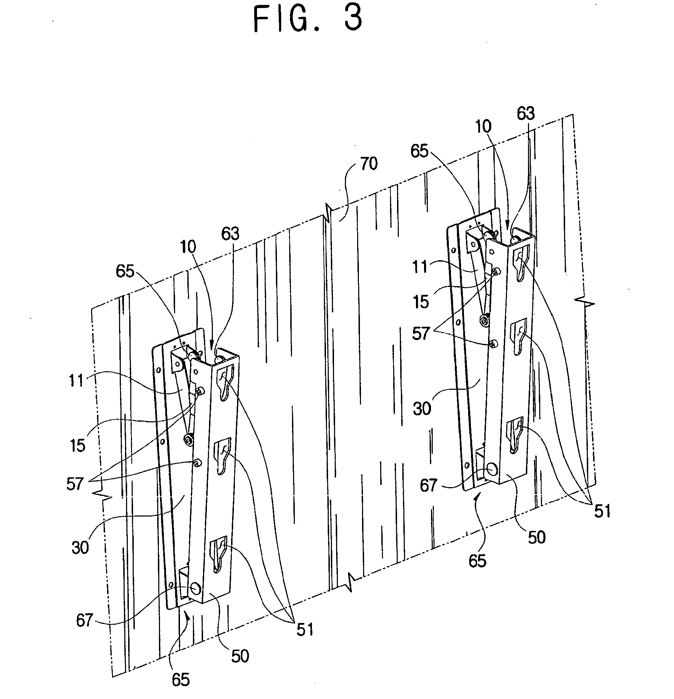

As illustrated in Figure 3, two mounting brackets are attached to the wall 70 parallel to each other for attachment of one display main body 1 thereto. Hereinafter, the left mounting bracket will now be described.

The display main body 1 is attached to the main body support 50 using a plurality of bolts 5 which can be attached to the main body 1 so as to protrude therefrom. The bolts 5 locate in a plurality of elongated holes 51 (to be described later) in the main support 50. The bolts 5 are attached to the rear surface of the display main body 1 so that their heads are spaced from the rear surface of the display main body 1 by a predetermined distance. Each bolt 5 has a head with a diameter larger than the diameter of its threaded rod in cross section.

The main body support 50 has a "U"-shaped cross section, and is formed with a pair of second pin coupling holes 53 in an enlarged upper end thereof. The main support 50 is also provided with a pair of third pin coupling holes 55 in the lower end thereof.

The elongated holes 51 in the main body bracket 50 correspond in position with the bolts 5 protruding from the rear of the display main body 1.

Each elongated hole 51 has a keyhole shape, i.e. an upper part of the elongated holes 51 has a width larger than the diameter of the head of the bolt 5, and a lower part has a width smaller than the diameter of the head of the bolt 5 but larger than the diameter of the thread rod of the bolt 5. The bolts 5 may be inserted into the upper part of the elongated hole 51 and then the main body slid relative to the main support 50 so that the bolts engage the lower part of the elongated hole 51.

The main support 50 includes a safety bolt 57 to prevent the display main body 1 from being detached from the main support 50 unless the safety bolt 57 is removed. The safety bolt 57 is received in a safety bolt hole 56 adjacent to each elongated hole 51 so that removal of the bolt 5 is blocked by the safety bolt 57.

A lower hinge part 65 is formed by pivotally mounting the third pin coupling holes 55 of the main body bracket 50 to a second link bracket 45 of the base 30 by means of a third hinge pin 67.

The base 30 is a thin plate which is mounted onto the wall 70. On an upper end of the base 30 a first rectangular through hole 31 is formed. A first link bracket 41 is mounted to the plate and extends through the hole 31. A first link 11 is fastened to the first link bracket 41 via a first pin through hole 12. On the lower end of the base 30 a second rectangular through hole 35 is formed. A second link bracket 45 is mounted to the plate and extends through the hole 35. The third pin coupling hole 55 of the main body bracket 50 is pivotally attached to the second link bracket 45.

The first link bracket 41 includes a flat surface 42 fastened against the plate in the region of the hole 31. A pair of webs 44 protrude from the flat surface 42 through the hole 31 and each have a first pin coupling hole 43 therein for rotatably coupling the first link bracket 41 to the first pin through hole 12 of the first link 11.

The second link bracket 45 includes a flat surface 46 fastened against the plate in the region of the second through hole 35. A pair of webs 48 protrude from the flat surface 46 and each have a third pin through hole 47 therein for rotatably coupling the second link bracket 45 to the third pin coupling hole 55 of the main body bracket 50.

The link assembly 10 includes first and second links 11,15 to enable the display main body 1 to be foldable towards and away from the wall 70. A torsion spring 27 is provided between the first and second links 11,15 and is operable to bias links 11,15 into a folded position in which the display main body 1 is located against the wall 70. A friction coupling 20 connects the first and second links 11,15 together. The frictional force between the first and second links 11,15 is greater than the biasing force provided by the spring 27.

The first link 11 is an elongate member having a U-shaped cross section and a first end formed with the pair of first pin through holes 12 rotatably coupled to the first pin coupling hole 43 of the first link bracket 41 by means of a pair of first hinge pins 61, and a second end formed with a pair of bolt combining holes 13 rotatably coupled to the second link 15.

Like the first link 11, the second link 15 is an elongate member having a U-shaped cross section and a first end formed with the pair of second pin through holes 16 rotatably coupled to the second pin coupling holes 53 of the main body support 50 by means of a pair of second hinge pins 63, and a second end formed with a pair of bolt through holes 17 rotatably coupled to the bolt combining holes 13 of the first link 11. The second link 15 has a larger width than the first link 11 so that the first link 11 can fold within the second link 15.

The torsion spring 27 is received on a connecting bolt 21 of the friction coupling 20, and includes a first end coupled to the first link 11 and a second end coupled to the second link 15. The biasing force provided by the torsion spring 27 draws the first link 11 toward the second link 15. Thus, the torsion spring 27 biases the display main body 1 towards the wall 70. It is preferably that the biasing force generated by the torsion spring 27 is approximately equal to the torque produced by the weight of the display main body 1 about the lower hinge part 65.

The friction part 20 includes the connecting bolt 21 inserted in the bolt connecting hole 13 of the first link 11, the bolt through hole 17 of the second link 15, through the torsion spring 27, a connecting nut 23 connected with the connecting bolt 21, and a plurality of washers 25 provided between the connecting bolt 21 and the connecting nut 23. Thus, as the connecting bolt 21 and the connecting nut 23 are tightened, the friction part 20 produces the frictional force between the first and second links 11,15. The frictional force is preferably a little larger than the biasing force of the torsion spring 27.

Therefore, even if the display main body 1 is released from the main support 50, the angle of the inclination of the main body support 50 against the base 30 does not change because the frictional force is larger than the biasing force of the torsion spring 27. Furthermore, the plurality of washers 25 between the connecting bolt 21 and the connecting nut 23 prevents the connecting bolt 21 and the connecting nut 23 from coming loose.

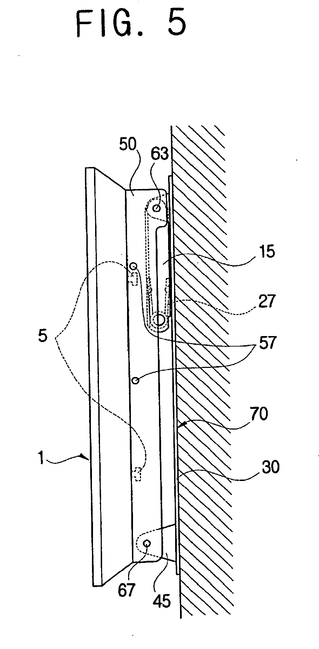

As illustrated in Figure 5, the display apparatus can be folded against the wall 70 by tilting the display main body 1 of Figure 2 about the lower hinge part 65. A user can tilt the display main body 1 toward the wall 70 by applying only a little force because of the biasing force provided by the torsion spring 27 which assists in restoring the display main body 1 into a position against the wall 70. When the main body is flush against the wall 70, the second link 15 accommodates the first link 11 and the main body support 50 accommodates the second link 15 and the first link 11 so that main body support 50 and the base 30 are closely adjacent to each other. The display apparatus is kept in the folded state by the frictional force provided by the friction part 20.

Referring to Figure 2, to tilt the display main body 1 toward the wall 70, a backward torque "T₁ = F₁ x L₁" produced by a force "F₁" backwardly pressing the upper part of the display main body 1 about the lower hinge part 65 should be a little larger than a frictional energy "E₂" due to the elasticity of the torsion spring 27 elastically restoring the display main body 1 in an opposite direction of the torque "T₂" and a torque "'T₂ = W x L₂" produced by the weight "W" of the display main body 1 about the lower hinge part 65. That is, T₁ > E₁ - (E₂ - T₂). Further, as described above, because the elastic energy "E₂" due to the elasticity of the torsion spring 27 is approximately equal to the torque "T₂" of the display main body 1, the backward torque "T₁" should be only larger than the frictional energy "E₁" due to the friction of the friction part 20.

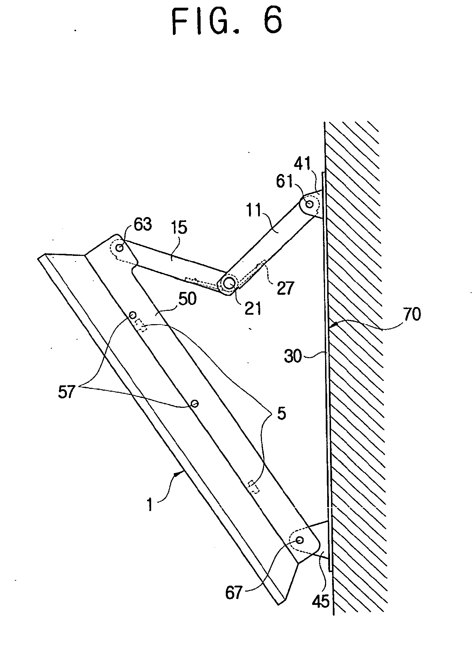

As illustrated in Figure 6, the display apparatus according to the present invention can be tilted away from the wall 70 by tilting the display main body 1 of Figure 2 about the lower hinge part 65. The display main body 1 is prevented from being rapidly angled from the wall 70 because of the elasticity of the torsion spring 27 restoring the display main body 1 in a direction towards the wall 70. However, when the display apparatus is released, it is kept in the expanded state by the frictional force provided by the friction part 20.

At least one of the first and second links 11,15 and the lower hinge part 65 is provided with a stopper (not shown) between the main body bracket 50 and the base bracket 30 to restrict the angle of tilt of the display main body 1.

Turning to Figure 2, to tilt the display main body 1 against the wall 70, a forward torque "t₁ = F₂ x L₁" produced by a force "F₂" forwardly pressing the upper part of the display main body 1 about the lower hinge part 65 should be a little larger than the frictional energy "E₁" due to the friction of the friction part 20 minus the difference between the torque "T₂ = W x L₂" produced by the weight "W" of the display main body 1 about the lower hinge part 65 and the elastic energy "E₂" due to the elasticity of the torsion spring 27 elastically restoring the display main body 1 in an opposite direction of the torque "T₂" of the display main body 1, the forward torque "t₁" should be only larger than the frictional energy "E₁" due to the friction of the friction part 20. Herein, the backward torque "T₁" and the forward torque "t₂" are approximately equal to each other, so that nearly the same force is needed to tilt the display main body 1 regardless of forward or backward tilting. Therefore, there is no inconvenience due to the different of force between backward and forward tilting. Furthermore, a user can minutely adjust the tilt of the display main body 1.

In the foregoing embodiment, the base 30 is provided between the wall 70 and the link assembly 10. However, the link assembly 10 may be directly mounted onto the wall, without the base 30. Further, in the foregoing embodiment, the main body support 50 is provided between the link assembly 10 and the display main body 1. However, the link assembly 10 may be directly connected to the display main body 1 without the main support 50.

In the foregoing embodiment, the friction part 20 is provided in the hinge part between the first and second links 11 and 15. However, a friction part may be provided in a hinge part between the base and the first link, or between the main body support and the second link.

In the foregoing embodiment, the torsion spring 27 is provided in the friction part 20 between the first and second links 11,15. However, a spring member such as flat spring, a compression spring, and an extension spring, etc., may be provided in at least one of hinge parts provided among the display main body, the wall and the first and second links.

In the foregoing embodiment, one display main body 1 is mounted via a pair of mounting racks. However, one display main body may be mounted using one mounting rack or three or more mounting racks according to the size of the display main body.

In the foregoing embodiment, the safety bolt 57 and the safety bolt hole 56 are employed to prevent the display main body 1 from being separated from the main body bracket 50. However, a safety pin without a screw thread and a safety pin hole may be employed instead of the safety bolt 57 and the safety bolt hole 56.

Thus, a display apparatus according to the present invention comprises first and second links, a spring member and a friction part between a display main body and a wall, so that the display apparatus has a simple tilting structure and is tilted by a little force. Further, the display apparatus is designed to need nearly the same force to tilt the display main body regardless of the direction in which it is being tilted, so that the tilt of the display apparatus is easily and minutely adjusted.

Although a few embodiments of the present invention have been shown and described, it would be appreciated by those skilled in the art that changes may be made in this embodiment without departing from the invention, the scope of which is defined in the claims.

## Claims

1. A support bracket for mounting a monitor to an inclined plane (70) such as a wall, the support bracket comprising a first hinge means (65) to enable the monitor to pivot with respect to the inclined plane (70), a hinged stay (10) having first and second ends rotatably mountable to the monitor and the inclined plane (70) respectively, and spring means (27) operatively associated with the hinged stay (10) to bias a monitor mounted to the support bracket towards the inclined plane (70) **characterised in that** the hinged stay comprises first and second members (11,15) and means are provided to pivotally attach the first and second members together with a frictional force that is greater than, or equal to, the biasing force generated by the spring means (27).

2. A support bracket according to claim 1, wherein means are provided to pivotally attach the first and/or second ends of the hinged stay (10) to the monitor and inclined plane (70) such that a frictional force between the first end and the monitor and/or between the second end and the inclined plane (70) is greater than, or equal to, the biasing force generated by the spring means (27).

3. A support bracket according to claim 1 or claim 2, wherein the spring means (27) comprises a torsion spring disposed between and acting on the first and second members (11,15).

4. A support bracket according to claim 3, wherein the first and second members (11,15) are connected by a bolt (12), the torsion spring (27) being disposed on the bolt (21).

5. A support bracket according to any preceding claim, wherein the first and second members (11,15) of the hinged stay (10) are U-shaped elongate channels, the second member (11) being smaller than the first member (15) so that it is received within the first member (15) when the monitor is positioned against the inclined plane (70).

6. A support bracket according to any preceding claim, including a base plate (30) for attachment to the inclined plane (70), the second end of the hinged stay (10) being pivotally attached to a link member (41) mounted to the base plate (30) and a portion (45) of the hinge means (65) being mounted to the base plate (30).

7. A support bracket according to any preceding claim, including a monitor support plate (50), the first end of the hinged stay (10) being pivotally attached to the support plate (50) and a portion of the hinge means (65) being formed by the support plate (50).

8. A support bracket according to claim 7, wherein a keyhole shaped slot (51) is provided in the support plate (50) such that a bolt (5) extending from a monitor cooperates with the keyhole shaped slot (5) to mount a monitor to the support plate (50).

9. A support bracket according to any preceding claim wherein the first member (11) has a U-shaped cross section and is larger than the second member (15) such that the second member (15) can be accommodated within the first member (11).

10. A display apparatus including a display main body formed with a display part, the display apparatus comprising a lower hinge part provided in a rear lower part of the display main body to tilt the display main body against an installation plane and a link assembly provided in a rear upper part of the display main body, and connecting the display main body to the installation plane, the link assembly including a first link having a first end rotatably connected to the installation plane and an opposite second end, a second link having a first end rotatably connected to the display main body and a second end rotatably connected to the second end of the first link, and a spring member provided in at least one of hinge parts of the first and second links and having elasticity to restore the display main body toward the installation plane **characterised in that** the link assembly further includes a friction part provided in the hinge part of the first and second links and producing a rotation friction therebetween which is larger than the elasticity of the spring member.

11. The display apparatus according to claim 10 wherein the spring member includes a torsion spring having a first end coupled to the first link and a second end coupled to the second link.

12. The display apparatus according to claim 11 wherein the friction part includes a connecting bolt inserted in the torsion spring and in the hinge part of the first and second links, a connecting nut connected with the connecting bolt and at least one washer provided between the connecting bolt and the connecting nut.

13. The display apparatus according to claim 10 further comprising a base bracket mounted onto the installation plane and supporting the display main body and the link assembly, the base bracket including a first link bracket provided in the upper part thereof and rotatably connected to the first end of the second link and a second link bracket provided in the lower part thereof and rotatably connected to the rear lower part of the display main body.

14. The display apparatus according to claim 13 further comprising a main body bracket detachably connected to the rear of the display main body and rotatably connected to the link assembly and the base bracket, the main body bracket including an upper part rotatably connected to the first end of the first link and a lower part rotatably connected to the second link bracket of the base bracket.

15. The display apparatus according to claim 14 wherein the rear of the display main body is connected with at least one bolt to be coupled to the main body bracket, and the main body bracket is formed with at least one elongated hole in correspondence with the bolt of the display main body.

16. The display apparatus according to claim 15 wherein a head of the bolt connected to the display main body is spaced from the rear surface of the display main body by a predetermined distance, and is larger in diameter than a thread rod thereof in cross section, and the elongated hole has an upper part of the width larger than the diameter of the head of the bolt, and a lower part of the width smaller than the diameter of the head of the bolt and larger in diameter than the diameter of the thread rod of the bolt.

17. The display apparatus according to claim 16 wherein a plurality of elongated holes is provided to be connected with various sizes of a display main body.

18. The display apparatus according to claim 16 wherein the main body bracket includes a safety bolt provided adjacent to the elongated hole and prevents the display main body from being separated from the main body bracket due to an external force, and a safety bolt hole in which the safety bolt is inserted.

19. The display apparatus according to claim 11 wherein a backward torque "T₁ = F₁ x L₁" produced by a force "F₁" backwardly pressing the upper part of the display main body about the lower hinge part should be a little larger than a frictional energy "E₁" due to the friction of the friction part minus the difference between an elastic energy "E₂" due to the elasticity of the torsion spring elastically restoring the display main body in an opposite direction of the torque "T₂" and a torque "T₂ = W x L₂" produced by the weight "W" of the display main body about the lower hinge part so that T₁ > E₁ - (E₂ - T₂).

20. The display apparatus according to claim 19 wherein the backward torque "T₁" should be only larger than the frictional energy "E₁" due to the friction of the friction part.

21. The display apparatus according to claim 11 wherein a forward torque "t₁ = F₂ x L₁" produced by a force "F₂" forwardly pressing the upper part of the display main body about the lower hinge part should be a little larger than the frictional energy "E₁" due to the friction of the friction part minus the difference between the torque "T₂ = W x L₂" produced by the weight "W" of the display main body about the lower hinge part and the elastic energy "E₂" due to the elasticity of the torsion spring elastically restoring the display main body in an opposite direction of the torque "T₂" such that t₁ > E₁ - (T₂ - E₂).

22. The display apparatus according to claim 21 wherein the forward torque "T₁" should be only larger than the frictional energy "E₁" due to the friction of the friction part.

23. The display apparatus according to claim 17 wherein the link assembly further includes a friction part provided in a hinge part between the base bracket and the first link.

24. The display apparatus according to claim 10 wherein the link assembly further includes a friction part provided in a hinge part between the main body bracket and the second link.

25. The display apparatus according to claim 16 wherein the main body bracket includes a safety pin provided adjacent to the elongated hole and prevents the display main body from being separated from the main body bracket due to an external force.

26. The display apparatus according to claim 16 further comprising a pair of base brackets mounted onto the installation plane and supporting the display main body and the link assembly, each of the base brackets including a first link bracket provided in the upper part thereof and rotatably connected to the first end of the second link and a second link bracket provided in the lower part thereof and rotatably connected to the rear lower part of the display main body.

## Patentansprüche

1. Halterung zum Anbringen eines Monitors an einer geneigten Ebene (70), wie beispielsweise einer Wand, wobei die Halterung eine erste Gelenkeinrichtung (65), die es ermöglicht, den Monitor in Bezug auf die geneigte Ebene (70) zu schwenken, eine Gelenkstütze (10), die ein erstes und ein zweites Ende hat, die drehbar an dem Monitor bzw. der geneigten Ebene (70) angebracht werden können, sowie eine Federeinrichtung (27) umfasst, die funktional mit der Gelenkstütze (10) verbunden ist, um einen an der Halterung angebrachten Monitor auf die geneigte Ebene (70) zu zu spannen, **dadurch gekennzeichnet, dass** die Gelenkstütze ein erstes und ein zweites Element (11, 15) umfasst und eine Einrichtung vorhanden ist, mit der das erste und das zweite Element mit einer Reibungskraft schwenkbar aneinander angebracht werden, die größer ist als oder genauso groß wie die durch die Federeinrichtung (27) erzeugte Spannkraft.

2. Halterung nach Anspruch 1, wobei eine Einrichtung vorhanden ist, mit der das erste und/oder zweite Ende der Gelenkstütze (10) an dem Monitor und der geneigten Ebene (70) so angebracht wird, dass eine Reibungskraft zwischen dem ersten Ende und dem Monitor und/oder zwischen dem zweiten Ende und der geneigten Ebene (70) größer ist als oder genauso groß wie die durch die Federeinrichtung (27) erzeugte Spannkraft.

3. Halterung nach Anspruch 1 oder Anspruch 2, wobei die Federeinrichtung (27) eine Drehfeder umfasst, die zwischen dem ersten und dem zweiten Element (11, 15) angeordnet ist und auf sie einwirkt.

4. Halterung nach Anspruch 3, wobei das erste und das zweite Element (11, 15) durch eine Schraube (21) verbunden sind und die Drehfeder (27) an der Schraube (21) angeordnet ist.

5. Halterung nach einem der vorangehenden Ansprüche, wobei das erste und das zweite Element (11, 15) der Gelenkstütze (10) U-förmige längliche Profile sind und das zweite Element (11) kleiner ist als das erste Element (15), so dass es in dem ersten Element (15) aufgenommen ist, wenn der Monitor an der geneigten Ebene (17) positioniert ist.

6. Halterung nach einem der vorangehenden Ansprüche, die eine Grundplatte (30) zur Anbringung an der geneigten Ebene (70) enthält, wobei das zweite Ende der Gelenkstütze (10) schwenkbar an einem Verbindungselement (41) angebracht ist, das an der Grundplatte (30) angebracht ist, und ein Abschnitt (45) der Gelenkeinrichtung (65) an der Grundplatte (30) angebracht ist.

7. Halterung nach einem der vorangehenden Ansprüche, die eine Monitor-Trageplatte (50) enthält, wobei das erste Ende der Gelenkstütze (10) schwenkbar an der Trageplatte (50) angebracht ist und ein Abschnitt der Gelenkeinrichtung (65) durch die Trageplatte (50) gebildet wird.

8. Halterung nach Anspruch 7, wobei ein schlüssellochförmiger Schlitz (51) in der Trageplatte (50) vorhanden ist, so dass eine Schraube (5), die sich von einem Monitor aus erstreckt, mit dem schlüssellochförmigen Schlitz (5) zusammenwirkt, um einen Monitor an der Trageplatte (50) anzubringen.

9. Halterung nach einem der vorangehenden Ansprüche, wobei das erste Element (11) einen U-förmigen. Querschnitt hat und größer ist als das zweite Trageelement (15), so dass das zweite Element (15) in dem ersten Element (11) aufgenommen werden kann.

10. Anzeigevorrichtung, die einen Anzeige-Hauptkörper enthält, der mit einem Anzeigeteil versehen ist, wobei die Anzeigevorrichtung einen unteren Gelenkteil, der in einem hinteren unteren Teil des Anzeige-Hauptkörpers vorhanden ist, um den Anzeige-Hauptkörper an eine Installationsebene zu neigen, und eine Verbindungsanordnung umfasst, die in einem hinteren oberen Teil des Anzeige-Hauptkörpers vorhanden ist und den Anzeige-Hauptkörper mit der Installationsebene verbindet, wobei die Verbindungsanordnung ein erstes Verbindungsglied, das ein erstes Ende, das mit der Installationsebene verbunden ist, und ein gegenüberliegendes zweites Ende hat, ein zweites Verbindungsglied, das ein erstes Ende, das drehbar mit dem Anzeige-Hauptkörper verbunden ist, und ein zweites Ende hat, das drehbar mit dem zweiten Ende des ersten Verbindungsgliedes verbunden ist, sowie ein Federelement enthält, das in wenigstens einem der Gelenkteile des ersten und des zweiten Verbindungsgliedes vorhanden ist und Elastizität aufweist, um den Anzeige-Hauptkörper zu der Installationsebene hin zurückzustellen, **dadurch gekennzeichnet, dass** die Verbindungsanordnung des Weiteren einen Reibungsteil enthält, der in dem Gelenkteil des ersten und des zweiten Verbindungsgliedes vorhanden ist und eine Drehreibung zwischen ihnen erzeugt, die grö-ßer ist als die Elastizität des Federelementes.

11. Anzeigevorrichtung nach Anspruch 10, wobei das Federelement eine Drehfeder enthält, die ein erstes Ende, das mit dem ersten Verbindungsglied verbunden ist, und ein zweites Ende hat, das mit dem zweiten Verbindungsglied verbunden ist.

12. Anzeigevorrichtung nach Anspruch 11, wobei der Reibungsteil eine Verbindungsschraube, die in die Drehfeder und den Scharnierteil des ersten und des zweiten Verbindungsgliedes eingeführt ist, eine Verbindungsmutter, die mit der Verbindungsschraube verbunden ist und wenigstens eine Scheibe enthält, die zwischen der Verbindungsschraube und der Verbindungsmutter vorhanden ist.

13. Anzeigevorrichtung nach Anspruch 10, die des Weiteren einen Grundträger umfasst, der an der Installationsebene angebracht ist und den Anzeige-Hauptkörper sowie die Verbindungsanordnung trägt, wobei der Grundträger einen ersten Verbindungsträger, der im oberen Teil desselben vorhanden ist und drehbar mit dem ersten Ende des zweiten Verbindungsgliedes verbunden ist, und einen zweiten Verbindungsträger enthält, der im unteren Teil desselben vorhanden ist und drehbar mit dem hinteren unteren Teil des Anzeige-Hauptkörpers verbunden ist.

14. Anzeigevorrichtung nach Anspruch 13, die des Weiteren einen Hauptkörper-Träger umfasst, der abnehmbar mit der Rückseite des Anzeige-Hauptkörpers verbunden ist und drehbar mit der Verbindungsanordnung und dem Grundträger verbunden ist, wobei der Hauptkörper-Träger einen oberen Teil, der drehbar mit dem ersten Ende des ersten Verbindungsgliedes verbunden ist, und einen unteren Teil enthält, der drehbar mit dem zweiten Verbindungsträger des Grundträgers verbunden ist.

15. Anzeigevorrichtung nach Anspruch 14, wobei die Rückseite des Anzeige-Hauptkörpers mit wenigstens einer Schraube verbunden ist, die mit dem Hauptkörper-Träger zu koppeln ist, und der Hauptkörper-Träger mit wenigstens einem länglichen Loch versehen ist, das dem Bolzen des Anzeige-Hauptkörpers entspricht.

16. Anzeigevorrichtung nach Anspruch 15, wobei ein Kopf der Schraube, die mit dem Anzeige-Hauptkörper verbunden ist, von der Rückseite des Anzeige-Hauptkörpers um eine vorgegebene Strecke beabstandet ist und einen größeren Durchmesser hat als eine Gewindestange desselben im Querschnitt, und das längliche Loch einen oberen Teil mit einer Breite, die größer ist als der Durchmesser des Kopfes der Schraube, sowie einen unteren Teil mit einer Breite, die kleiner ist als der Durchmesser des Kopfes der Schraube, und einem Durchmesser hat, der größer ist als der Durchmesser der Gewindestange der Schraube.

17. Anzeigevorrichtung nach Anspruch 16, wobei eine Vielzahl länglicher Löcher zur Verbindung mit verschiedenen Größen eines Anzeige-Hauptkörpers vorhanden ist.

18. Anzeigevorrichtung nach Anspruch 16, wobei der Hauptkörper-Träger eine Sicherheitsschraube, die an das längliche Loch angrenzend vorhanden ist und verhindert, dass der Anzeige-Hauptkörper aufgrund einer äußeren Kraft von dem Hauptkörper-Träger getrennt wird, sowie ein Sicherheitsschrauben-Loch enthält, in das die Sicherheitsschraube eingeführt wird.

19. Anzeigevorrichtung nach Anspruch 11, wobei ein Rückwärts-Drehmoment "T₁ = F₁ x L₁", das durch eine Kraft "F₁" erzeugt wird, die den oberen Teil des Anzeige-Hauptkörpers um den unteren Scharnierteil herum nach hinten presst, etwas größer sein sollte als eine Reibungsenergie "E₁" aufgrund der Reibung des Reibungsteils abzüglich der Differenz zwischen einer elastischen Energie "E₂" aufgrund der Elastizität der Drehfeder, die den Anzeige-Hauptkörper in einer zu dem Drehmoment "T₂" entgegengesetzten Richtung elastisch zurückstellt, und einem Drehmoment "T₂ = W x L₂", das durch das Gewicht "W" des Anzeige-Hauptkörpers um den unteren Gelenkteil herum erzeugt wird, so dass T₁ > E₁ - (E₂ - T₂).

20. Anzeigevorrichtung nach Anspruch 19, wobei das Rückwärts-Drehmoment "T₁" nur größer sein sollte als die Reibungsenergie "E₁" aufgrund der Reibung des Reibungsteils.

21. Anzeigevorrichtung nach Anspruch 11, wobei ein Vorwärts-Drehmoment "t₁ = F₂ x L₁", das durch eine Kraft "F₂" erzeugt wird, die den oberen Teil des Anzeige-Hauptkörpers um den unteren Gelenkteil herum nach vom drückt, etwas größer sein sollte als die Reibungsenergie "E₁" aufgrund der Reibung des Reibungsteils abzüglich der Differenz zwischen dem Drehmoment "'T₂ = W x L₂", das durch das Gewicht "W" des Anzeige-Hauptkörpers um den unteren Gelenkteil herum erzeugt wird und der elastischen Energie "E₂" aufgrund der Elastizität der Drehfeder, die den Anzeige-Hauptkörper elastisch in einer dem Drehmoment "T₂" entgegengesetzten Richtung rückstellt, so dass t₁ > E₁ - (T₂ - E₂).

22. Anzeigevorrichtung nach Anspruch 21, wobei das Vorwärts-Drehmoment "T₁" nur größer sein sollte als die Reibungsenergie "E₁" aufgrund der Reibung des Reibungsteils.

23. Anzeigevorrichtung nach Anspruch 17, wobei die Verbindungsanordnung des Weiteren einen Reibungsteil enthält, der in einem Gelenkteil zwischen dem Grundträger und dem ersten Verbindungsglied vorhanden ist.

24. Anzeigevorrichtung nach Anspruch 10, wobei die Verbindungsanordnung des Weiteren einen Reibungsteil enthält, der in einem Gelenkteil zwischen dem Hauptkörper-Träger und dem zweiten Verbindungsglied vorhanden ist.

25. Anzeigevorrichtung nach Anspruch 16, wobei der Hauptkörper-Träger einen Sicherheitsbolzen enthält, der an das längliche Loch angrenzend vorhanden ist und verhindert, dass der Anzeige-Hauptkörper aufgrund einer Kraft von außen von dem Hauptkörper-Träger getrennt wird.

26. Anzeigevorrichtung nach Anspruch 16, die des Weiteren ein Paar Grundträger umfasst, die an der Installationsebene angebracht sind und den Anzeige-Hauptkörper und die Gelenkanordnung tragen, wobei jeder der Grundträger einen ersten Verbindungsträger enthält, der im oberen Teil desselben vorhanden ist und drehbar mit dem ersten Ende des zweiten Verbindungsgliedes verbunden ist, sowie einen zweiten Verbindungsträger enthält, der im unteren Teil desselben vorhanden ist und drehbar mit dem hinteren unteren Teil des Anzeige-Hauptkörpers verbunden ist.

## Revendications

1. Support de fixation pour monter un écran sur un plan incliné (70), un mur par exemple, le support de fixation comprenant des premiers moyens d'articulation (65) qui permettent à l'écran de pivoter relativement au plan incliné (70), une entretoise articulée (10) ayant une première et une seconde extrémités respectivement montées de façon rotative sur l'écran et sur le plan incliné (70), et des moyens formant ressort (27) qui fonctionnent en coopération avec l'entretoise articulée (10) pour rappeler vers le plan incliné (70) un écran monté sur le support de fixation, **caractérisé en ce que** l'entretoise articulée comprend un premier et un second éléments (11,15), et **en ce que** des moyens sont prévus pour attacher ensemble de façon pivotante les premier et second éléments avec une force de friction qui est égale ou supérieure à la force de rappel engendrée par les moyens formant ressort (27).

2. Support de fixation selon la revendication 1, dans lequel des moyens sont prévus pour fixer sur l'écran et sur le plan incliné (70) les première et/ou seconde extrémité(s) de l'entretoise articulée (10) de sorte qu'une force de friction entre la première extrémité et l'écran et/ou entre la seconde extrémité et le plan incliné (70) est égale ou supérieure à la force de rappel engendrée par les moyens formant ressort (27).

3. Support de fixation selon la revendication 1 ou la revendication 2, dans lequel les moyens formant ressort (27) comprennent un ressort de torsion disposé entre les premier et second éléments (11,15) et qui agit sur ceux-ci.

4. Support de fixation selon la revendication 3, dans lequel les premier et second éléments (11,15) sont connectés par un boulon (12), le ressort de torsion (27) étant disposé sur le boulon (21).

5. Support de fixation selon l'une quelconque des revendications précédentes, dans lequel les premier et second éléments (11,15) de l'entretoise articulée (10) sont des profilés creux allongés en forme de « U », le second élément (11) étant plus petit que le premier élément (15) de sorte à être reçu à l'intérieur du premier élément (15) lorsque l'écran est placé contre le plan incliné (70).

6. Support de fixation selon l'une quelconque des revendications précédentes, qui comprend une plaque d'appui (30) qui se fixe sur le plan incliné (70), la seconde extrémité de l'entretoise articulée (10) étant attachée de manière pivotante à un élément de liaison (41) monté sur la plaque d'appui (30) et une partie (45) des moyens d'articulation (65) étant montée sur la plaque d'appui (30).

7. Support de fixation selon l'une quelconque des revendications précédentes, qui comprend une plaque de support (50) pour écran, la première extrémité de l'entretoise articulée (10) étant attachée de façon pivotante à la plaque de support (50) et une partie des moyens d'articulation (65) étant formée par la plaque de support (50).

8. Support de fixation selon la revendication 7, dans lequel une fente en forme de trou de serrure (51) est prévue dans la plaque de support (50) de sorte qu'un boulon (5) qui s'étend depuis un écran coopère avec la fente en forme de trou de serrure (5) pour le montage d'un écran sur la plaque de support (50).

9. Support de fixation selon l'une quelconque des revendications précédentes, dans lequel le premier élément (11) a une section en forme de « U » et est plus grand que le second élément (15) de sorte que le second élément (15) peut être reçu à l'intérieur du premier élément (11).

10. Appareil de visualisation comprenant un corps principal de l'appareil de visualisation formé avec une partie d'affichage, l'appareil de visualisation comprenant une partie articulée inférieure prévue dans une partie inférieure arrière du corps principal de l'appareil de visualisation pour incliner le corps principal de l'appareil de visualisation contre un plan d'installation, et un ensemble de liaison prévu dans une partie supérieure arrière du corps principal de l'appareil de visualisation et qui connecte le corps principal de l'appareil de visualisation au plan d'installation, l'ensemble de liaison comprenant un premier élément de liaison ayant une première extrémité connectée de façon rotative au plan d'installation et une seconde extrémité opposée, un second élément de liaison ayant une première extrémité connectée de façon rotative au corps principal de l'appareil et une seconde extrémité connectée de façon rotative à la seconde extrémité du premier élément de liaison, et un élément formant ressort prévu dans au moins une des parties d'articulation des premier et second éléments de liaison et ayant l'élasticité nécessaire pour ramener le corps principal de l'appareil de visualisation vers le plan d'installation, **caractérisé en ce que** l'ensemble de liaison comprend de plus une partie à friction prévue dans la partie articulée des premier et second éléments de liaison et qui produit, entre ces éléments, une friction par rotation dont la force excède l'élasticité de l'élément formant ressort.

11. Appareil de visualisation selon la revendication 10, dans lequel l'élément formant ressort comprend un ressort de torsion ayant une première extrémité couplée au remier élément de liaison et une seconde extrémité couplée au second élément de liaison.

12. Appareil de visualisation selon la revendication 11, dans lequel la partie à friction comprend un boulon de jonction introduit dans le ressort de torsion et dans la partie d'articulation des premier et second éléments de liaison, un écrou de jonction connecté avec le boulon de jonction, et au moins une rondelle prévue entre le boulon de jonction et l'écrou de jonction.

13. Appareil de visualisation selon la revendication 10, qui comprend de plus un support de base monté sur le plan d'installation et qui supporte le corps principal de l'appareil de visualisation et l'ensemble de liaison, le support de base comprenant un premier support de liaison prévu dans sa partie supérieure et connecté de façon rotative à la première extrémité du second élément de liaison et un second support de liaison prévu dans sa partie inférieure et connecté de façon rotative à la partie inférieure arrière du corps principal de l'appareil de visualisation.

14. Appareil de visualisation selon la revendication 13, qui comprend de plus un support de corps principal connecté de façon amovible à l'arrière du corps principal de l'appareil de visualisation et connecté de façon rotative à l'ensemble de liaison et au support de base, le support du corps principal comprenant une partie supérieure connectée de façon rotative à la première extrémité du premier élément de liaison et une partie inférieure connectée de façon rotative au second support de liaison du support de base.

15. Appareil de visualisation selon la revendication 14, dans lequel l'arrière du corps principal de l'appareil de visualisation est connecté avec au moins un boulon à coupler au support du corps principal, et le support du corps principal est formé avec au moins un trou allongé qui correspond avec le boulon du corps principal de l'appareil de visualisation.

16. Appareil de visualisation selon la revendication 15, dans lequel la tête du boulon connecté au corps principal de l'appareil de visualisation est séparée de la surface arrière du corps principal de l'appareil de visualisation par une distance prédéterminée et a un diamètre plus grand que la section du filet de ce boulon, et le trou allongé a une partie supérieure de sa largeur plus grande que le diamètre de la tête du boulon et une partie inférieure de sa largeur plus petite que le diamètre de la tête du boulon et un diamètre plus grand que le diamètre du filet du boulon.

17. Appareil de visualisation selon la revendication 16, dans lequel plusieurs trous allongés sont prévus pour être connectés avec diverses tailles d'un corps principal de l'appareil de visualisation.

18. Appareil de visualisation selon la revendication 16, dans lequel le support du corps principal comprend un boulon de sécurité est adjacent au trou allongé et empêche le corps principal de l'appareil de visualisation d'être séparé du support du corps principal sous l'effet d'une force externe, et un trou pour boulon de sécurité dans lequel est introduit le boulon de sécurité.

19. Appareil de visualisation selon la revendication 11, dans lequel un couple rétrograde « T₁ = F₁ x L₁ » produit par une force « F₁ » qui presse vers l'arrière la partie supérieure du corps principal de l'appareil de visualisation autour de la partie articulée inférieure devrait être légèrement plus important qu'une énergie de friction « E₁ » due à la friction de la partie à friction, moins la différence entre une énergie élastique « E₂ » due à l'élasticité du ressort de torsion qui ramène élastiquement le corps principal de l'appareil de visualisation dans uen direction opposée au couple « T₂ » et un couple « T₂ = W x L₂ » produit par le poids « W » du corps principal de l'appareil de visualisation autour de la partie articulée inférieure, de sorte que T₁ > E₁ - (E₂ - T₂).

20. Appareil de visualisation selon la revendication 19, dans lequel seule la force du couple rétrograde « T₁ » devrait être plus grande que celle de l'énergie de friction « E₁ » due à la friction de la partie à friction.

21. Appareil de visualisation selon la revendication 11, dans lequel un couple direct « t₁ = F₂ x L₁ » produit par une force « F₂ » qui pousse vers l'avant la partie supérieure du corps principal de l'appareil de visualisation autour de la partie articulée inférieure devrait être légèrement plus important que l'énergie de friction « E₁ » de la partie à friction due à la friction de la partie à friction moins la différence entre le couple « T₂ = W x L₂ » produit par le poids « W » du corps du corps principal de l'appareil de visualisation autour de la partie articulée inférieure, et l'énergie élastique « E₂ » due à l'élasticité du ressort de torsion qui rappelle élastiquement le corps principal de l'appareil de visualisation dans une direction opposée au couple « T₂ » de sorte que t₁ > E₁ - (T₂ - E₂).

22. Appareil de visualisation selon la revendication 21, dans lequel seule la force du couple direct « T₁ » devrait être plus grande que celle de l'énergie de friction « E₁ » due à la friction de la partie à friction.

23. Appareil de visualisation selon la revendication 17, dans lequel l'ensemble de liaison comprend de plus une partie à friction prévue dans une partie d'articulation entre le support de base et le premier élément de liaison.

24. Appareil de visualisation selon la revendication 10, dans lequel l'ensemble de liaison comprend de plus une partie à friction prévue dans une partie d'articulation entre le support du corps principal et le second élément de liaison.

25. Appareil de visualisation selon la revendication 16, dans lequel le support du corps principal comprend une goupille de sécurité adjacente au trou allongé et qui empêche le corps principal de l'appareil de visualisation d'être séparé du support du corps principal par une force externe.

26. Appareil de visualisation selon la revendication 16, qui comprend de plus une paire de supports de base montés sur le plan d'installation et qui supportent le corps principal de l'appareil de visualisation et l'ensemble de liaison, chacun des supports de base comprenant un premier support d'élément de liaison prévu dans sa partie supérieure et connecté de façon rotative à la première extrémité du second élément de liaison, et un second support d'élément de liaison prévu dans sa partie inférieure et connecté de façon rotative à la partie inférieure arrière du corps principal de l'appareil de visualisation.
